# EUROPEAN PATENT APPLICATION

(11) **EP 2 487 872 A1**
(43) Date of publication of application: **15.08.2012**
(21) Application number: 11797290.1
(22) Date of filing: 15.09.2011
(51) Int. Cl.: H04L 29/08, H04W 28/20

(54) **METHOD, DEVICE AND SYSTEM FOR BANDWIDTH CONTROL**

(30) Priority: 14.12.2010 CN 201010586778
(71) Applicant: Huawei Technologies Co., Ltd., Shenzen, Guangdong 518129 (CN)
(72) Inventor: WEI, Wei, Shenzhen, Guangdong 518129 (CN); PAN, Nengyi, Shenzhen, Guangdong 518129 (CN); ZHOU, Zongrong, Shenzhen, Guangdong 518129 (CN)
(74) Representative: Thun, Clemens
(86) International application number: PCT/CN2011/079687
(87) International publication number: WO 2012/079396

(57) **Abstract**

The embodiments of the present invention disclose a method, an apparatus and a system for bandwidth control, wherein the method comprises: acquiring and identifying a HTTP request message of a stream media-on-demand service, and forwarding the HTTP request message of the stream media-on-demand service to a media server; receiving a HTTP response message which is returned from the media server and corresponds to the HTTP request message of the stream media-on-demand service; parsing the HTTP response message, and obtaining a playback bit-rate of a stream media file to be transmitted; determining a transmission bandwidth allocated practically for the stream media-on-demand service according to comparison result between the playback bit-rate and a user subscription bandwidth allocated initially for the stream media-on-demand service; and controlling the transmission of the stream media file by adopting the determined transmission bandwidth. As such, in the embodiments of the present invention, the bandwidth control is performed directly on the network element, thereby solving the problem in the prior art that there are more interactions between different network elements and the processing overhead of other network elements is additionally increased while the utilization rate of the network resources is simply and effectively increased.

## Description

### FIELD OF THE INVENTION

The present invention relates to the field of communication technology, and particularly, to a method, an apparatus and a system for bandwidth control.

### BACKGROUND OF THE INVENTION

With the continuous developments of 3G technology and the gradual maturity of the wireless surfer technology, users who utilize an intelligent terminal and a wireless means to access Internet are increasing. The demand of such users on a stream media service also increases dramatically. In order to meet the demand of more and more wireless users to access Internet, a base station/base station controller/GGSN (Gateway GPRS Support Node) will allocate a subscription bandwidth to the users respectively when the users initiates PDP (Packet Data Protocol) activation. When a terminal initiates an on-line audio/video-on-demand request, the base station/base station controller/GGSN transmits a stream media file to a terminal user according to the user subscription bandwidth. However, when a playback bit-rate of a media file is much smaller than the allocated user subscription bandwidth, the stream media video service carried by HTTP currently has a problem of wasting network bandwidth resources.

### SUMMARY OF THE INVENTION

The embodiments of the present invention provide a method, an apparatus and a system for bandwidth control so as to improve a utilization rate of the network resources.

In one aspect, the embodiment of the present invention provides a method for bandwidth control, including:
acquiring and identifying a HTTP request message of a stream media-on-demand service, and forwarding the HTTP request message of the stream media-on-demand service to a media server;
receiving a HTTP response message which is returned from the media server and corresponds to the HTTP request message of the stream media-on-demand service;
parsing the HTTP response message, and obtaining a playback bit-rate of a stream media file to be transmitted;
determining a transmission bandwidth allocated practically for the stream media-on-demand service according to comparison result between the playback bit-rate and a user subscription bandwidth allocated initially for the stream media-on-demand service; and controlling transmission of the stream media file by adopting the determined transmission bandwidth.

In another aspect, the embodiment of the present invention provides a communication apparatus, including:
a first communication interface module configured to acquire a HTTP request message transmitted on a network;
a protocol identifying module configured to identify the HTTP request message being a HTTP request message of a stream media-on-demand service;
a second communication interface module configured to forward a HTTP request message of the stream media-on-demand service to a media server, and receive a HTTP response message which is returned from the media server and corresponds to the HTTP request message of the stream media-on-demand service;
a bit-rate identifying module configured to parse the HTTP response message, and obtain a playback bit-rate of a stream media file to be transmitted; and
a bandwidth controlling module configured to determine a transmission bandwidth allocated practically for the stream media-on-demand service according to comparison result between the playback bit-rate and a user subscription bandwidth allocated initially for the stream media-on-demand service; and control transmission of the stream media file by adopting the determined transmission bandwidth.

In another aspect, the embodiment of the present invention provides a system for a mobile user to access a stream media file, including a terminal, a communication apparatus and a media server, wherein:
the terminal is configured to send a HTTP request message of a stream media-on-demand service of a user;
the communication apparatus is configured to forward the HTTP request message of the stream media-on-demand service to the media server after acquiring and identifying the HTTP request message of the stream media-on-demand service; receive and parse a HTTP response message which is returned from the media server and obtain a playback bit-rate of a stream media file to be transmitted; determine a transmission bandwidth allocated practically for the stream media-on-demand service according to comparison result between the playback bit-rate and a user subscription bandwidth allocated initially for the stream media-on-demand service; and transmit a HTTP response message carried with stream media data to the terminal by adopting the determined transmission bandwidth after the reception of the HTTP response message carried with stream media data; and
the media server is configured to receive the HTTP request message of the stream media-on-demand service, and return the HTTP response message which is carried with a media meta-data head and corresponds to the HTTP response message of the stream media-on-demand service; and return the HTTP response message carried with stream media data.

As such, in the embodiments of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file and performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and control the transmission of the stream media file by adopting the determined transmission bandwidth. Accordingly, while simply and effectively improving the utilization rate of the network resources, this also solves thereby solving the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

### BRIEF DESCRIPTION OF THE DRAWINGS

In order to more clearly describe the embodiments of the present invention or the technical solutions in the prior art, the drawings necessary for the descriptions of the embodiments or the prior art are briefly introduced as follows. Obviously, the drawings in the following description just illustrate some embodiments of the present invention. For persons skilled in the art, it is possible to obtain other drawings according to such drawings without paying any creative work.
Fig. 1 is a schematic diagram of a flow of a method for bandwidth control according to Embodiment 1 of the present invention;
Fig. 2 is a schematic diagram of a flow of a method for bandwidth control according to Embodiment 2 of the present invention;
Fig. 3a is a schematic diagram of an interaction flow of the method for bandwidth control under the video-on-demand service according to Embodiment 3 of the present invention;
Fig. 3b is a schematic diagram of the structure of a network application environment of the method illustrated in Fig. 3a;
Fig. 3c is a schematic diagram of a message structure of a HTTP response message of the on-line video-on-demand service according to Embodiment 3 of the present invention;
Fig. 3d is a schematic diagram of a structure of a media meta-data head carried on the HTTP protocol by the HTTP response message of the on-line video-on-demand service related in the Embodiment 3 of the present invention;
Fig. 3e is a schematic diagram of a real packet transmitted on a network by the HTTP response message of the on-line video-on-demand service according to Embodiment 3 of the present invention;
Fig. 4 is a schematic diagram of the structure of a communication apparatus according to Embodiment 4 of the present invention;
Fig. 5 is a schematic diagram of the structure of another communication apparatus according to Embodiment 5 of the present invention; and
Fig. 6 is a schematic diagram of the structure of a system for a mobile user to access the stream media file according to Embodiment 6 of the present invention.

### DETAILED DESCRIPTION OF THE EMBODIMENTS

In order to make the objects, technical solutions and advantages of the present invention be clearer, the embodiments of the present invention are further described in detail in conjunction with the drawings.

Before the introduction of the method for managing bandwidth provided in the present invention, firstly, the fundamental knowledge of the present invention is briefly introduced.

DPI (Deep Packet Inspection) technology is a traffic detecting and controlling technology based on an application layer. When an IP (Internet Protocol) data packet, a TCP or UDP data stream passes through a bandwidth managing system based on the DPI technology, the system restructures the information of the application layer in the OSI Seven Layer Protocols by performing in-depth reading to the content of an IP packet load, so as to obtain the type and content of an application L7 layer protocol, and then performs the shaping operation on the traffic according to the management strategy defined by the system.

### Embodiment 1

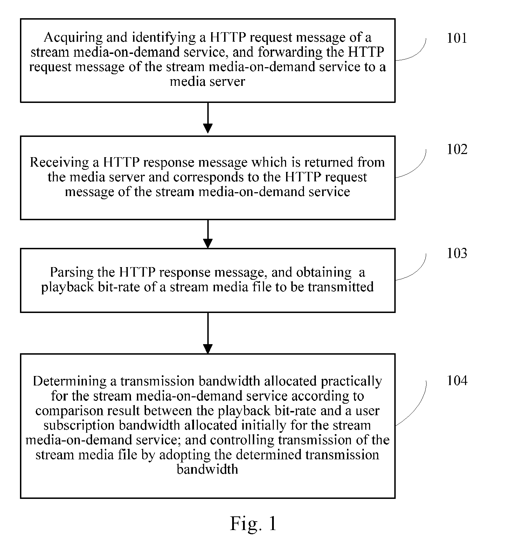

With reference to Fig. 1, the present embodiment provides a method for bandwidth control. The execution subject of the method can be a base station, a base station controller or a GGSN. The method according to the embodiment of the present invention may include the following steps.

Step 101: acquiring and identifying a HTTP request message of a stream media-on-demand service, and forwarding the HTTP request message of the stream media-on-demand service to a media server.

Herein, the HTTP request message of the media-on-demand service can be a request message of the on-line audio/video-on-demand service, or a request message of the off line audio/video-on-demand service.

In one implementation, a protocol feature is parsed based on the DPI technology, and the HTTP request message of the stream media-on-demand service is identified according to the protocol feature.

Step 102: receiving a HTTP response message which is returned from the media server and corresponds to the HTTP request message of the stream media-on-demand service;

Step 103: parsing the HTTP response message, and obtaining a playback bit-rate of a stream media file to be transmitted.

In one implementation, the step 103 is specifically to: parse a media meta-data head of the HTTP response message to obtain a playback bit-rate field, or parse a head domain of the HTTP response message to obtain a stream media file length field, and parse the media meta-data head of the HTTP response message to obtain a duration field.

If the playback bit-rate filed exists, the playback bit-rate of the stream media file to be transmitted is equal to the value of the playback bit-rate field. If the playback bit-rate field does not exist, the playback bit-rate of the stream media file to be transmitted is equal to a specific value of value of the stream media file length field to value of the duration field.

Step 104: determining a transmission bandwidth allocated practically for the stream media-on-demand service according to the comparison result between the playback bit-rate and a user subscription bandwidth allocated initially for the stream media-on-demand service; and controlling the transmission of the stream media file by using the determined transmission bandwidth.

In one implementation, the step 104 may specifically include:
comparing the user subscription bandwidth allocated initially for the stream media-on-demand service with a first transmission bandwidth, wherein the first transmission bandwidth is obtained by adding a first adjustment value to the playback bit-rate;
taking the user subscription bandwidth as the transmission bandwidth allocated practically for the stream media-on-demand service if the first transmission bandwidth is larger than or equal to the user subscription bandwidth;
taking the first transmission bandwidth as the transmission bandwidth allocated practically for the stream media-on-demand service if the first transmission bandwidth is smaller than the user subscription bandwidth.

In another implementation, the step 104 may specifically include:
comparing the playback bit-rate of the stream media file with the user subscription bandwidth allocated initially for the stream media-on-demand service;
taking the user subscription bandwidth as the transmission bandwidth allocated practically for the stream media-on-demand service if the playback bit-rate is larger than or equal to the user subscription bandwidth;
taking the playback bit-rate as the transmission bandwidth allocated practically for the stream media-on-demand service, or taking the first transmission bandwidth as the transmission bandwidth allocated practically for the stream media-on-demand service if the playback bit-rate is less than the user subscription bandwidth, wherein the first transmission bandwidth is obtained by adding a first adjustment value to the playback bit-rate and is smaller than the user subscription bandwidth.

As such, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file, performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and control the transmission of the stream media file by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

### Embodiment 2

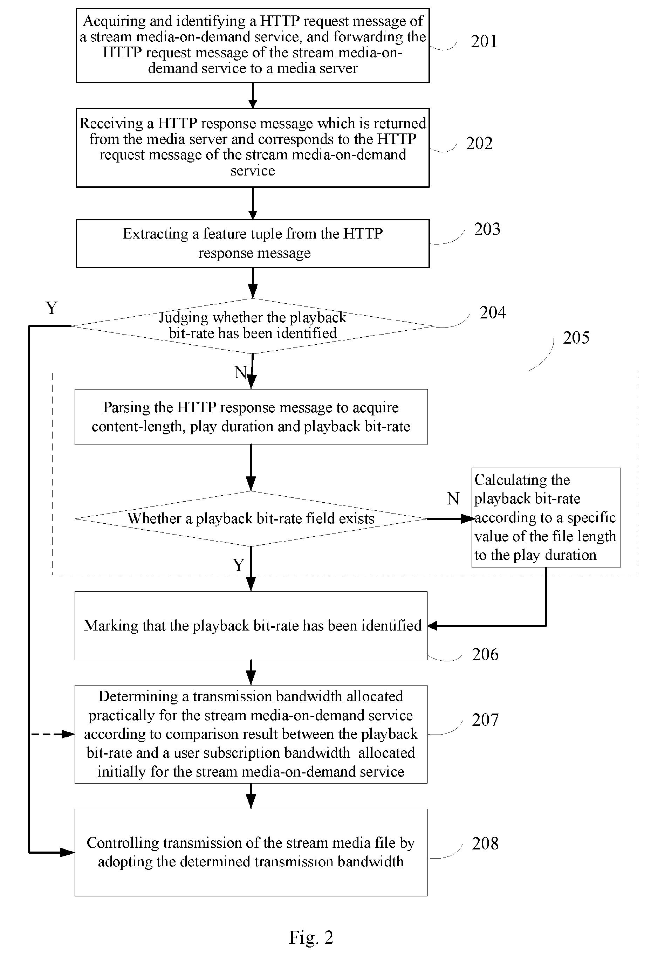

With reference to Fig. 2, the embodiment provides another method for bandwidth control, and the execution subject of the method may be the base station, the base station controller or the GGSN. The application scenario of the embodiment of the present invention is that the media server returns, in a way of a plurality of packets, a response message that corresponds to the HTTP request message of the stream media-on-demand service. That is, the media server transmits, in a way of a plurality of packets, the HTTP response message carried with the stream media data. The method according to the embodiment of the present invention may include the following steps:
Step 201: acquiring and identifying a HTTP request message of a stream media-on-demand service, and forwarding the HTTP request message of the stream media-on-demand service to a media server;
Step 202: receiving a HTTP response message which is returned from the media server and corresponds to the HTTP request message of the stream media-on-demand service;
Step 203: extracting a feature tuple from the HTTP response message;

In one implementation, step 203 may include:
pre-processing the HTTP response message, so as to separate out an IP datagram; specifically, separating out the IP datagram from a radio bearer protocol;
extracting any one or any combination selected from the group consisting of the user identification (such as MSISDN (Mobile Station Integrated Services Digital Number)), source IP address, source port, destination IP address, destination port, and protocol type (such as L7 layer protocol type) from the IP datagram.
Step 204: judging whether the playback bit-rate is identified;

In one implementation, step 204 may include:
matching the feature tuple extracted in step 203 with the maintained feature tuple management table, and performing step 205 if the matching is not successful;
performing step 205, if the matching is successful and the bit-rate recognition status identification that is associated with the matched feature tuple record indicates that the playback bit-rate is not identified;
performing step 207 or step 208, if the matching is successful and the bit-rate recognition status identification that is associated with the matched feature tuple record indicates that the playback bit-rate has been identified.

It needs to be explained that in one implementation, each feature tuple record in the feature tuple management table is configured to represent the connection that corresponds to the user (one TCP connection), wherein, each feature tuple record includes any one or any combination selected from the group consisting of the source IP address, the source port, the destination IP address, the destination port, the protocol type and the user identification.

In another implementation, besides any one or any combination selected from the group consisting of the source IP address, the source port, the destination IP address, the destination port, the protocol type and the user identification, the feature tuple record in the feature tuple management table further includes a bit-rate recognition status identification.

In another implementation, besides any one or any combination selected from the group consisting of the source IP address, the source port, the destination IP address, the destination port, the protocol type and the user identification, the feature tuple record in the feature tuple management table further includes a compass which points to the bit-rate recognition status identification associated with the feature tuple record.

It shall be understood that in one implementation, the bit-rate recognition status identification can be bonded or associated with the transmission bandwidth allocated practically for the stream media-on-demand service. Correspondingly, if the matching is successful and the bit-rate recognition status identification that is associated with the matched feature tuple record indicates that the playback bit-rate has been identified, it is possible to directly obtain the determined transmission bandwidth allocated practically for the stream media-on-demand service, and to control the transmission of the stream media file by directly using the determined transmission bandwidth.

Step 205: parsing the HTTP response message and obtaining the playback bit-rate of the stream media file to be transmitted;

The step may specifically include:
parsing the HTTP response message, to acquire a Content-Length field of a length the stream media file, and a duration field, and optically further acquiring a playback bit-rate filed;
judging whether the playback bit-rate filed exists, if it exists, directly parsing out the playback bit-rate filed value; if it does not exist, calculating the playback bit-rate according to a specific value of the value of the Content-Length field to the value of the duration field.
Step 206: marking that the playback bit-rate has been identified.

In one implementation, step 206 may include:
associating the feature tuple extracted in step 203 with the bit-rate recognition status identification for indicating that the playback bit-rate has been identified, and adding the associated feature tuple as a new feature tuple record to the feature tuple management table; or
adding the feature tuple extracted in step 203 as a new feature tuple record to the feature tuple management table, wherein the feature tuple record points to a bit-rate recognition status identification for indicating that the playback bit-rate has been identified.
Step 207: determining a transmission bandwidth allocated practically for the stream media-on-demand service according to comparison result between the playback bit-rate and a user subscription bandwidth allocated initially for the stream media-on-demand service;
Step 208: controlling transmission of the stream media file by adopting the determined transmission bandwidth.
It needs to be explained that in the embodiment of the present invention, the sequences of step 206 and step 207 are not limited.

As such, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service. A playback bit-rate of the stream media file is acquired after receiving a response message of the media server. Bandwidth control is performed directly on the network element. That is, a transmission bandwidth allocated practically for the stream media-on-demand service is determined according to the comparison result between the playback bit-rate and a user subscription bandwidth allocated initially for the stream media-on-demand service. The transmission of the stream media file is controlled by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

### Embodiment 3

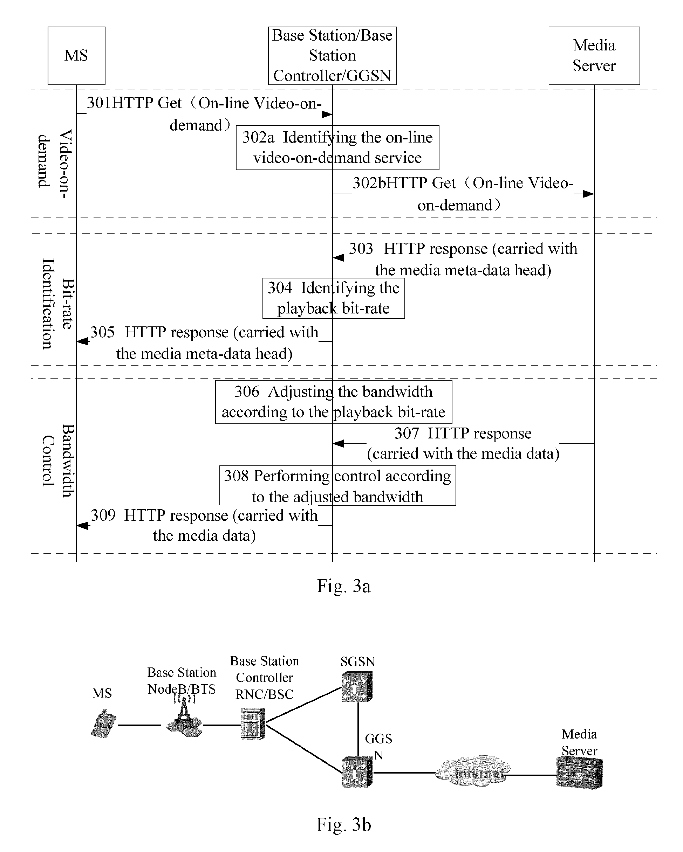

With reference to Fig. 3a, the present embodiment provides another method for bandwidth control, which is applied to the network environment as shown in Fig. 3b. In the embodiment, the terminal in Fig. 3a refers to a device enabling wireless surfer, which can be an intelligent terminal, such as a mobile phone, or a netbook based on a data card. The terminal user activates the request by initiating a packet data protocol, so as to open the wireless surfer service. When the terminal initiates the request of opening the wireless surfer service, the base station/base station controller/GGSN allocates the user subscription bandwidth for the stream media-on-demand service to the terminal. The method in the embodiment of the present invention may include the following steps:
Step 301: imitating, by the terminal, the on-line video-on-demand message HTTP Get;

In the embodiment, taking the terminal user initiating the on-line video-on-demand as an example, correspondingly, the stream media file is a video file.

It should be understood that the embodiment is not specifically defined, and the message can be the video-on-demand message or the audio-on-demand message, and so on.

Steps 302a-302b: capturing and identifying, by the base station, the base station controller or the GGSN, the on-line video-on-demand request message HTTO Get initiated by the terminal, and forwarding the request to the media server;

In the embodiment, the base station, the base station controller or the GGSN captures the HTTP request message initiated by the terminal, and identifies the HTTP request message initiated by the terminal by using the DPI technology, identifying that the message is the request message of the on-line video-on-demand service.

As shown in Fig. 3b, the base station can be a NodeB, a BTS (Base Transceiver Station) or LTE (Long Term Evolution) (not shown in the drawing); and the base station controller can be a RNC (Radio Network Controller) or a BSC (Base Station Controller).

The NodeB is a wireless transceiving device serving for a cell or a plurality of cells, is connected with RNC by a standard Iub interface, and mainly performs the processing of Uu interface physical layer protocol. Its main function is spread spectrum, modulation, channel encoding and de-spread and demodulation, in which the channel decoding further includes the functions of converting a base band signal and a RF signal. Meanwhile, the NodeB also performs the wireless resource management function such as inner-loop power control. The NodeB logically corresponds to the BTS in the GSM network.

Step 303: receiving, by the base station, the base station controller or the GGSN, the HTTP response message of the on-line video-on-demand service returned from the media server, the HTTP response message carried with the media meta-data head;

In the embodiment, the HTTP response message of the on-line video-on-demand service returned from the media server is carried with the media meta-data head, such as FLV Header. It needs to be explained herein that the technical solution is not limited to the FLV format carried on the HTTP protocol, and any media format carried by the HTTP protocol can be used.

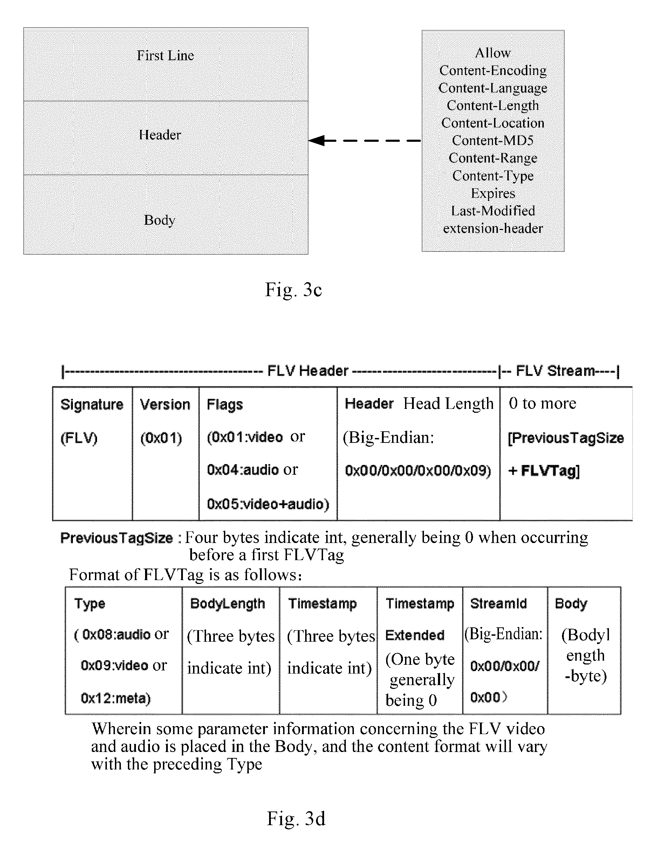

With reference to Fig. 3c, the HTTP response message carries the stream media file length (see the value of the Content-Length field in the Header domain in Fig. 3c), and the Body in the HTTP response message carries the media stream data packaged by FLV format.

With reference to Fig. 3d, the FLV format is Header+Body, and the fields such as Totaldatarate and duration are carried in the Header of FLV, and what is carried in the Body of FLV is the net load of the media stream data.

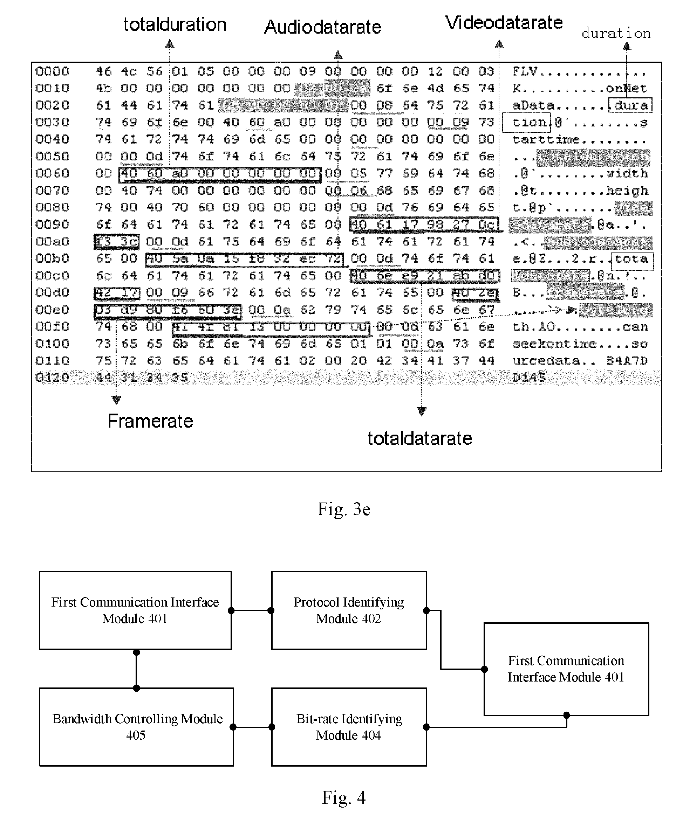

With reference to Fig. 3e, a real packet is shown. By making a comparison with the format explanation in Fig. 3d, it is possible to parse the parameters of the related video and audio, such as duration, Videodatarate, Audiodatarate and Totaldatarate. Specifically, in Fig.3e, the Totaldatrate is a total playback bit-rate of the audio and video of the stream media, the Videodatarate is the playback bit-rate of the video of the stream media, the Audiodatarate is the playback bit-rate of the audio of the stream media, and the duration is a total play duration of the video and audio of the stream media. Persons skilled in the art should understand, e.g., the totaldatarate in Fig. 3e, such as 40 6e e9 21 ab d0, is indicated by binary coding.

Step 304: parsing, by the base station, the base station controller or the GGSN, the HTTP response message of the received on-line video-on-demand service, and obtaining the playback bit-rate of the video file;

The step may specifically include:
a) extracting the source IP address, source port, destination IP address and destination port from the HTTP response message after the base station, the base station controller or the GGSN receives the HTTP response message;
b) judging, by the base station, the base station controller or the GGSN, according to the port number and the IP address, whether the connection established with the media server is marked with the state that the playback bit-rate has been identified. In the embodiment, step c) is performed when the current judging result is negative;

Specifically, the extracted port number and the IP address are matched with the maintained feature tuple management table (each feature tuple record in the feature tuple management table is configured to represent a TCP connection, wherein each feature tuple record includes any one or any combination selected from the group consisting of the source IP address, the source port, the destination IP address, the destination port, the protocol type and the user identification). In the embodiment, if the matching is not successful, step c) is performed.
c) parsing, by the base station, the base station controller or the GGSN, the media meta-data head of the HTTP resource message of the on-line video file-on-demand service to obtain the playback bit-rate field Totaldatarate, the value of which is 40 6e e9 21 ab d0;

Persons skilled in the art should understand that the embodiment of the present invention is not limited to the above implementation, and it also can be that after the base station, the base station controller or the GGSN receives the HTTP response message, the stream media file length field is obtained by parsing the head domain of the HTTP response message, and the duration field is obtained by parsing the media meta-data head of the HTTP response message; the playback bit-rate of the stream media file to be transmitted is equal to the specific value of the value of the stream media file length field to the value of the duration field.
d) marking, by the base station, the base station controller or the GGSN, the connection for transmitting the requested video file, established with the media server, with the state that the playback bit-rate has been identified.

It should be understood that in the embodiment, if the video file has been demanded before, the base station, the base station controller or the GGSN will mark the connection with the state that "the playback bit-rate has been identified". Once the base station, the base station or the GGSN judges again, according to the port number and the IP address in the HTTP response message returned from the media server, the playback bit-rate state of the connection established with the media server, if the state is that the playback bit-rate has been identified, it is possible to search the playback bit-rate of the stream media file directly in a memory, so as to control the transmission bandwidth according to the playback bit-rate; or, it is possible to search the transmission bandwidth allocated practically for the stream media-on-demand service directly in the memory. It is convenient for the terminal to directly know the playback bit-rate or the transmission bandwidth allocated practically for the stream media-on-demand service when demanding again the video, which omits the parsing procedure.

Step 305: returning, by the base station, the base station controller or the GGSN, the HTTP response message of the on-line video-on-demand service to the terminal, the HTTP response message carried with the media meta-data head;

Step 306: performing, by the base station, the base station controller or the GGSN, adjustment to the playback bit-rate to obtain the transmission bandwidth allocated practically for the video-on-demand service, the transmission bandwidth being configured to transmit the requested video file;

In the embodiment, the base station, the base station controller or the GGSN provides the corresponding dispatching algorithm for the video stream, to perform Qos control. If the playback bit-rate is larger than and equal to the user subscription bandwidth allocated initially for the stream media-on-demand service, the bandwidth for transmitting the video file is the user subscription bandwidth, without change. If the playback bit-rate is smaller than the user subscription bandwidth, a new bandwidth is generated according to the playback bit-rate, and the bandwidth for transmitting the video file is adjusted into the new generated bandwidth. In which the playback bit-rate may be taken as the new generated bandwidth, or the playback bit-rate being added with an adjustment value (for ensuring the user experience, which can be set by RNC/LTE/GGSN server according to practical situations), may be taken as the new generated bandwidth. The transmission bandwidth of the video-on-demand of the user subsequently performs QoS bandwidth control by taking this bandwidth as standard. For example, when the playback bit-rate of the video file acquired from the response message is 512kbps, while the user subscription bandwidth is 128kbps which is smaller than the bandwidth of the video file, 128kbps is still taken as the practical transmission bandwidth. However, if the user subscription bandwidth is 1Mbps which is much higher than the audio file bandwidth, in order to effectively use the resources, the playback bit-rate of the video file is taken as the practical transmission bandwidth. Further, in order to ensure the transmission quality and improve the user experience, a certain numerical value, e.g., 128kbps, may be added to the bandwidth of the video file, and then the practical transmission bandwidth is 256kbps.

Step 307: receiving, by the base station, the base station controller or the GGSN, the HTTP response message of the on-line video-on-demand service returned from the media server, the HTTP response message being carried with the media data;

It should be understood that in the practical application, the requested stream media data is generally transmitted by a plurality of packets.

Steps 308-309: adopting, by the base station, the base station controller or the GGSN, the transmission bandwidth obtained by the above adjustment (that is the transmission bandwidth allocated practically for the stream media-on-demand service) to control the transmission of the requested stream media file.

The step may specifically include:
a) extracting the IP address, the source port, the destination IP address and the destination port from the HTTP response message after the base station, the base station controller or the GGSN receives the HTTP response message;
b) judging, by the base station, the base station controller or the GGSN, according to the port number and the IP address, whether the connection established with the media server is marked with the state that the playback bit-rate has been identified. In the embodiment, step c) is performed when the current judging result is positive.

Specifically, the extracted port number and the IP address are matched with the maintained feature tuple management table (each feature tuple record in the feature tuple management table is configured to represent a TCP connection, wherein each feature tuple record includes any one or any combination selected from the group consisting of the source IP address, the source port, the destination IP address, the destination port, the protocol type and the user identification). In the embodiment, when the matching is successful, and the bit-rate recognition status identification that is associated with the matched feature tuple record indicates that the playback bit-rate has been identified, step c) is performed.
c) making, by the base station, the base station controller or the GGSN, a search to obtain the transmission bandwidth allocated practically for the stream media-on-demand service, and transmitting the HTTP response message of the on-line video-on-demand service to the terminal by adopting the transmission bandwidth allocated practically for the stream media-on-demand service, the HTTP response message carried with the media data.

It needs to be explained that the implementation network element of the embodiment of the present invention can be a single network element in the base station, the base station controller or the GGSN, or a plurality of network elements implement at the same time, but there is no any interaction among the network elements implementing at the same time.

As such, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file, performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and control the transmission of the stream media file by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

At the network element of the base station, the base station controller or the GGSN relating to the adjustment of the transmission bandwidth, the real-time stream request is captured and identified and the HTTP response corresponding thereto is received and parsed, and the playback bit-rate of the stream media file is obtained. The transmission bandwidth is adjusted based on the playback bit-rate, and the stream media file is transmitted by using the adjusted transmission bandwidth. Since each of the network elements can adjust the transmission bandwidth according to the playback bit-rate, it does not need to initiate the Qos update flow again, thereby saving the network resources. For the network element which does not need to adjust the transmission bandwidth, the bandwidth adjustment is not performed after the response message is received. Therefore, the extra overhead of the network elements is not increased. Compared with the prior art, the interaction process among network elements is saved, the utilization rate of the network resources is improved, and the implementation is simple.

### Embodiment 4

With reference to Fig. 4, the embodiment provides a communication apparatus. The communication apparatus includes a first communication interface module 401, a protocol identifying module 402, a second communication interface module 403, a bit-rate identifying module 404 and a bandwidth controlling module 405.

The first communication interface module 401 is configured to acquire a HTTP request message transmitted on the network.

The protocol identifying module 402 is configured to identify the HTTP request message being that of the stream media-on-demand service.

The second interface module 403 is configured to forward the HTTP request message of the stream media-on-demand service to a media server, and receive a HTTP response message which is returned from the media server and corresponds to the HTTP request message of the stream media-on-demand service.

The bit-rate identifying module 404 is configured to parse the HTTP response message, and obtaining a playback bit-rate of a stream media file to be transmitted.

The bandwidth controlling module 405 is configured to determine a transmission bandwidth allocated practically for the stream media-on-demand service according to the comparison result between the playback bit-rate and a user subscription bandwidth allocated initially for the stream media-on-demand service; and control transmission of the stream media file by adopting the determined transmission bandwidth.

In one implementation, the bit-rate identifying module 404 is specifically configured to: parse a media meta-data head of the HTTP response message to obtain a playback bit-rate field, or parse a head domain of the HTTP response message to obtain a stream media file length field, and parse the media meta-data head of the HTTP response message to obtain a duration field. If the playback bit-rate filed exists, the playback bit-rate of the stream media file to be transmitted is equal to the value of the playback bit-rate field. If the playback bit-rate field does not exist, the playback bit-rate of the stream media file to be transmitted is equal to a specific value of the value of the stream media file length field to the value of the duration field.

With reference to Fig. 3c, the HTTP response message carries the stream media file length (see the value the Content-Length field in the Header domain in Fig. 3c), and the Body in the HTTP response message carries the media stream data packaged by FLV format.

With reference to Fig. 3d, the FLV format is Header+Body, and the fields such as Totaldatarate and duration are carried in the Header of FLV, and what is carried in the Body of FLV is the net load of the media stream data.

With reference to Fig. 3e, a real packet is shown. By making a comparison with the format explanation in Fig. 3d, it is possible to parse the parameters of the related video and audio such as duration, Videodatarate, Audiodatarate and Totaldatarate. Specifically, in Fig. 3e, the Totaldatrate is a total playback bit-rate of the audio and video of the stream media, the Videodatarate is the playback bit-rate of the video of the stream media, the Audiodatarate is the playback bit-rate of the audio of the stream media, and the duration is a total play duration of the video and audio of the stream media. Persons skilled in the art should understand, e.g., the totaldatarate in Fig. 3e, such as 40 6e e9 21 ab d0, is indicated by binary coding.

In one implementation, the bandwidth controlling module 405 can include:
a first comparison unit configured to compare the user subscription bandwidth allocated initially for the stream media-on-demand service with a first transmission bandwidth obtained by adding a first adjustment value the playback bit-rate;
a first bandwidth controlling unit configured to take the user subscription bandwidth as the transmission bandwidth allocated practically for the stream media-on-demand service if comparison result of the first comparison unit is that the first transmission bandwidth is larger than or equal to the user subscription bandwidth; take the first transmission bandwidth as the transmission bandwidth allocated practically for the stream media-on-demand service if comparison result of the first comparison unit is that the first transmission bandwidth is smaller than the user subscription bandwidth; and control the transmission of the stream media file by adopting the transmission bandwidth allocated practically for the stream media-on-demand service.

In another implementation, the bandwidth controlling module 405 can include:
a second comparison unit configured to compare the playback bit-rate of the stream media file with the user subscription bandwidth allocated initially for the stream media-on-demand service;
a second bandwidth controlling unit configured to take the user subscription bandwidth as the transmission bandwidth allocated practically for the stream media-on-demand service if comparison result of the second comparison unit is that the playback bit-rate is larger than or equal to the user subscription bandwidth; take the playback bit-rate as the transmission bandwidth allocated practically for the stream media-on-demand service, or take a first transmission bandwidth which is obtained by adding a first adjustment value to the playback bit-rate and is smaller than the user subscription bandwidth as the transmission bandwidth allocated practically for the stream media-on-demand service if comparison result of the second comparison unit is that the playback bit-rate is less than the user subscription bandwidth; and controlling the transmission of the stream media file by adopting the transmission bandwidth allocated practically for the stream media-on-demand service.

As such, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file, performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and control the transmission of the stream media file by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

### Embodiment 5

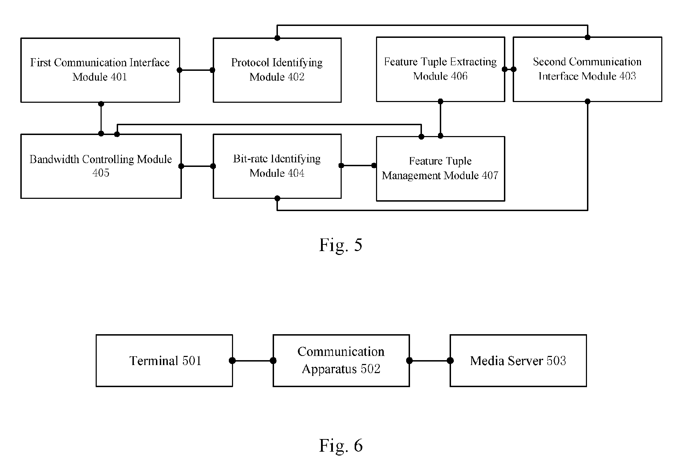

Fig. 5 is a structural schematic diagram of another communication apparatus according to the Embodiment 5 of the present invention. As shown in Fig. 5, on the basis of the devices as shown in Fig. 4, the present embodiment may further include:
a feature tuple extracting module 406 configured to extract a feature tuple from the HTTP response message received by the second communication interface module 403; the feature tuple here specifically can be any one or any combination selected from the group consisting of the user identification (such as MSISDN), the source IP address, the source port, the destination IP address, the destination port, and the protocol type (such as L7 layer protocol type);
a feature tuple management module 407 configured to match the feature tuple with a maintained feature tuple management table; enable the bit-rate identifying module 404 to perform processing if the matching is successful and the bit-rate recognition status identification that is associated with the matched feature tuple record indicates that the playback bit-rate is not identified or the matching is not successful; enable the bandwidth control module 405 to control the transmission of the stream media file by adopting directly the determined transmission bandwidth if the matching is successful and the bit-rate recognition status identification that is associated with the matched feature tuple record indicates that the playback bit-rate has been identified.

With reference to Fig. 5, in the embodiment of the present invention, preferably, the feature tuple management module 406 is further configured to associate the feature tuple extracted by the feature tuple extracting module 406 with the bit-rate recognition status identification for indicating that the bit-rate identifying module 404 has identified the playback bit-rate, and add the associated feature tuple as a new feature tuple record to the feature tuple management table; or add the feature tuple extracted by the feature tuple extracting module 406 as the new feature tuple record to the feature tuple management table, wherein the feature tuple record points to a bit-rate recognition status identification for indicating that the bit-rate identifying module has identified the playback bit-rate.

It needs to be explained that in one implementation, each feature tuple record in the feature tuple management table is configured to represent the connection that corresponds to the user (one TCP connection), wherein each feature tuple record includes any one or any combination selected from the group consisting of the source IP address, the source port, the destination IP address, the destination port, the protocol type and the user identification.

In one implementation, besides any one or any combination selected from the group consisting of the source IP address, the source port, the destination IP address, the destination port, the protocol type and the user identification, the feature tuple record in the feature tuple management table further includes a bit-rate recognition status identification.

In another implementation, besides any one or any combination selected from the group consisting of the source IP address, the source port, the destination IP address, the destination port, the protocol type and the user identification, the feature tuple record in the feature tuple management table further includes a compass which points to the bit-rate recognition status identification associated with the feature tuple record.

It shall be understood that in one implementation, the bit-rate recognition status identification can be bonded or associated with the transmission bandwidth allocated practically for the stream media-on-demand service. Correspondingly, if the matching is successful and the bit-rate recognition status identification that is associated with the matched feature tuple record indicates that the playback bit-rate has been identified, it is possible to directly obtain the determined transmission bandwidth allocated practically for the stream media-on-demand service, and to control the transmission of the stream media file by directly using the determined transmission bandwidth.

The communication apparatus in the embodiment can specifically be the base station, the base station controller and the GGSN in different network application environments.

The communication apparatus provided in the embodiment can specifically belong to the same conception as the method embodiment, and please refer to the method embodiment for its specific implementation process which is not repeated herein.

As for the specific implementation of the above function units, please refer to the descriptions of the method embodiment.

Each of the units of the device of the embodiment of the present invention can be integrally formed or arranged separately. The above units can be combined into one unit, or can be further divided into a plurality of subunits.

As such, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file and performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and controls the transmission of the stream media file by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

### Embodiment 6

With reference to Fig. 6, the present embodiment provides a system for a mobile user to access a stream media file. This system includes a terminal 501, a communication apparatus 502 and a media server 503.

The terminal 501 is configured to send a HTTP request message of a stream media-on-demand service of a user.

The communication apparatus 502 is configured to forward the HTTP request message of the stream media-on-demand service to the media server after acquiring and identifying the HTTP request message of the stream media-on-demand service; receive and parse a HTTP response message which is returned from the media server to obtain a playback bit-rate of a stream media file to be transmitted; determine a transmission bandwidth allocated practically for the stream media-on-demand service according to comparison result between the playback bit-rate and a user subscription bandwidth allocated initially for the stream media-on-demand service; and transmit a HTTP response message carried with stream media data to the terminal by adopting the determined transmission bandwidth after the reception of the HTTP response message carried with stream media data.

The media server 503 is configured to receive the HTTP request message of the stream media-on-demand service, and return the HTTP response message which is carried with a media meta-data head and corresponds to the HTTP request message of the stream media-on-demand service; and return the HTTP response message carried with stream media data.

The communication apparatus 502 in the embodiment can specifically be the base station, the base station controller or the GGSN or the like in different network application environments.

The system for a mobile user to access a stream media file provided in the embodiment is a practical group network, which can refer to Fig. 3b. It is not repeated herein.

The system provided in the embodiment can specifically belong to the same conception as the method embodiment, and please refer to the method embodiment for its specific implementation process which is not repeated herein.

To sum up, in the embodiment of the present invention, a single network element in the network, such as the base station, the base station controller or the GGSN, forwards the HTTP request message of the stream media-on-demand service to the media server after capturing and identifying the HTTP request message of the stream media-on-demand service; obtains, after receiving a response message of the media server, a playback bit-rate of the stream media file and performs bandwidth control directly on the network element, that is to determine a transmission bandwidth allocated practically for the stream media-on-demand service according to the comparison result between the playback bit-rate and a user subscription bandwidth allocated initially for the stream media-on-demand service; and control the transmission of the stream media file by adopting the determined transmission bandwidth. Accordingly, while simply and effectively increasing the utilization rate of the network resources, this also solves the problem in the prior art that there are more interactions between different network elements and the processing overhead of other network elements is additionally increased because a Qos bandwidth flow is triggered to be updated once it needs to perform bandwidth adjustment after the GGSN identifies the playback bit-rate.

The embodiment of the present invention identifies the playback bit-rate of the on-line stream media audio/video-on-demand service on the base station, the base station controller or the GGSN, and allocates an appropriate bandwidth according to the playback bit-rate, in which the processing is simple, and the utilization rate of the network resources is improved.

The embodiment of the present invention can be implemented independently on the base station, the base station controller or the GGSN network element, and there does not need any interaction among network elements, so the implementation is simple. There is no need to newly add a network element device in the embodiment of the present invention. There is also no need to newly add a new protocol to support in the embodiment of the present invention.

Under the precondition of ensuring the video play quality, in the embodiment of the present invention, by a simple and effective method, the utilization rate of the network resources, in particular the wireless resources, is improved, thereby saving the transmission cost of the return link from the base station to the base station controller and between the RAN side and a core network, and relieving the dilatation pressure of the RAN side and the core network data service, so that the video access of more users can be ensured.

Persons skilled in the art can appreciate that all or part of the flow in the methods according to the above embodiments of the present invention can be realized by instructing relevant hardware through computer programs which can be stored in a computer-readable storage medium, and include the follow of each of the methods according to the above embodiments when the programs being executed. The storage medium may be magnetic disk, optical disk, ROM (Read-Only Memory) or RAM (Random Access Memory), etc.

The above embodiments are just preferred embodiments of the present invention, and are not intended to limit the present invention. Any modifications, equivalent replacements and improvements made within the spirit and principle of the present invention shall be covered in the protection scope of the present invention.

## Claims

1. A method for bandwidth control, comprising:
acquiring and identifying a HTTP request message of a stream media-on-demand service, and forwarding the HTTP request message of the stream media-on-demand service to a media server;
receiving a HTTP response message which is returned from the media server and corresponds to the HTTP request message of the stream media-on-demand service;
parsing the HTTP response message, and obtaining a playback bit-rate of a stream media file to be transmitted; and
determining a transmission bandwidth allocated practically for the stream media-on-demand service according to comparison result between the playback bit-rate and a user subscription bandwidth allocated initially for the stream media-on-demand service; and controlling transmission of the stream media file by adopting the determined transmission bandwidth.

2. The method according to claim 1, wherein the process of parsing the HTTP response message, and obtaining the playback bit-rate of the stream media file to be transmitted comprises:
parsing a media meta-data head of the HTTP response message to obtain a playback bit-rate field, or
parsing a head domain of the HTTP response message to obtain a stream media file length field, and parsing the media meta-data head of the HTTP response message to obtain a duration field; and
if the playback bit-rate filed exists, the playback bit-rate of the stream media file to be transmitted is equal to value of the playback bit-rate field; if the playback bit-rate field does not exist, the playback bit-rate of the stream media file to be transmitted is equal to a specific value of value of the stream media file length field to value of the duration field.

3. The method according to claim 1 or claim 2, wherein the process of determining a transmission bandwidth allocated practically for the stream media-on-demand service according to comparison result between the playback bit-rate and a user subscription bandwidth allocated initially for the stream media-on-demand service comprises:
comparing the user subscription bandwidth allocated initially for the stream media-on-demand service with a first transmission bandwidth, wherein the first transmission bandwidth is obtained by adding a first adjustment value to the playback bit-rate;
taking the user subscription bandwidth as the transmission bandwidth allocated practically for the stream media-on-demand service if the first transmission bandwidth is larger than or equal to the user subscription bandwidth; and
taking the first transmission bandwidth as the transmission bandwidth allocated practically for the stream media-on-demand service if the first transmission bandwidth is smaller than the user subscription bandwidth.

4. The method according to claim 1 or 2, wherein the process of determining the transmission bandwidth allocated practically for the stream media-on-demand service according to the comparison result between the playback bit-rate and the user subscription bandwidth allocated initially for the stream media-on-demand service comprises:
comparing the playback bit-rate of the stream media file with the user subscription bandwidth allocated initially for the stream media-on-demand service;
taking the user subscription bandwidth as the transmission bandwidth allocated practically for the stream media-on-demand service if the playback bit-rate is larger than or equal to the user subscription bandwidth; and
taking the playback bit-rate as the transmission bandwidth allocated practically for the stream media-on-demand service, or taking a first transmission bandwidth as the transmission bandwidth allocated practically for the stream media-on-demand service if the playback bit-rate is less than the user subscription bandwidth, wherein the first transmission bandwidth is obtained by adding a first adjustment value to the playback bit-rate and is smaller than the user subscription bandwidth.

5. The method according to claim 1, wherein if the media server returns, in a way of a plurality of packets, the HTTP response message that corresponds to the HTTP request message of the stream media-on-demand service,
after the process of receiving the HTTP response message which is returned from the media server and corresponds to the HTTP request message of the stream media-on-demand service, the method further comprises:
extracting a feature tuple from the HTTP response message, matching the feature tuple with a maintained feature tuple management table, performing the process of parsing the HTTP response message, and obtaining the playback bit-rate of the stream media file to be transmitted if the matching is successful and the bit-rate recognition status identification that is associated with a matched feature tuple record indicates that the playback bit-rate is not identified; and
performing the process of parsing the HTTP response message, and obtaining the playback bit-rate of the stream media file to be transmitted if the matching is not successful.

6. The method according to claim 5, wherein if the matching is successful and the bit-rate recognition status identification that is associated with the matched feature tuple record indicates that the playback bit-rate has been identified, the process of controlling transmission of the stream media file by directly adopting the determined transmission bandwidth is performed.

7. The method according to claim 5, wherein if the matching is not successful, after the process of parsing the HTTP response message, and obtaining the playback bit-rate of the stream media file to be transmitted, the method further comprises:
associating the feature tuple extracted from the HTTP response message with the bit-rate recognition status identification for indicating that the playback bit-rate has been identified, adding the associated feature tuple as a new feature tuple record to the feature tuple management table ; or
adding the feature tuple extracted from the HTTP response message as the new feature tuple record to the feature tuple management table, wherein the feature tuple record points to a bit-rate recognition status identification for indicating that the playback bit-rate has been identified.

8. The method according to claim 5, 6 or 7, wherein each feature tuple record in the feature tuple management table is configured to represents a connection that corresponds to the user, wherein each feature tuple record comprises any one or any combination selected from the group consisting of a source IP address, a source port, a destination IP address, a destination port, a protocol type and a user identification;
the process of extracting the feature tuple from the HTTP response message comprises:
pre-processing the HTTP response message to separate out an IP datagram; and
extracting, from the IP datagram, any one or any combination selected from the group consisting of a user identification, a source IP address, a source port, a destination IP address, a destination port, and a protocol type.

9. A communication apparatus, comprising:
a first communication interface module configured to acquire a HTTP request message transmitted on a network;
a protocol identifying module configured to identify the HTTP request message being a HTTP request message of a stream media-on-demand service;
a second communication interface module configured to forward a HTTP request message of the stream media-on-demand service to a media server, and receive a HTTP response message which is returned from the media server and corresponds to the HTTP request message of the stream media-on-demand service;
a bit-rate identifying module configured to parse the HTTP response message, and obtaining a playback bit-rate of a stream media file to be transmitted; and
a bandwidth controlling module configured to determine a transmission bandwidth allocated practically for the stream media-on-demand service according to comparison result between the playback bit-rate and a user subscription bandwidth allocated initially for the stream media-on-demand service; and control transmission of the stream media file by adopting the determined transmission bandwidth.

10. The apparatus according to claim 9, wherein the bit-rate identifying module is specifically configured to: parse a media meta-data head of the HTTP response message to obtain a playback bit-rate field, or parse a head domain of the HTTP response message to obtain a stream media file length field, and parse the media meta-data head of the HTTP response message to obtain a duration field; and if the playback bit-rate filed exists, the playback bit-rate of the stream media file to be transmitted is equal to value of the playback bit-rate field; if the playback bit-rate field does not exist, the playback bit-rate of the stream media file to be transmitted is equal to a specific value of value of the stream media file length field to value of the duration field.

11. The apparatus according to claim 9, wherein the bandwidth controlling module comprises:
a first comparison unit configured to compare the user subscription bandwidth allocated initially for the stream media-on-demand service with a first transmission bandwidth, wherein the first transmission bandwidth is obtained by adding a first adjustment value to the playback bit-rate;
a first bandwidth controlling unit configured to take the user subscription bandwidth as the transmission bandwidth allocated practically for the stream media-on-demand service if comparison result of the first comparison unit is that the first transmission bandwidth is larger than or equal to the user subscription bandwidth; take the first transmission bandwidth as the transmission bandwidth allocated practically for the stream media-on-demand service if comparison result of the first comparison unit is that the first transmission bandwidth is smaller than the user subscription bandwidth; and control the transmission of the stream media file by adopting the transmission bandwidth allocated practically for the stream media-on-demand service.

12. The apparatus according to claim 9, wherein the bandwidth controlling module comprises:
a second comparison unit configured to compare the playback bit-rate of the stream media file with the user subscription bandwidth allocated initially for the stream media-on-demand service;
a second bandwidth controlling unit configured to take the user subscription bandwidth as the transmission bandwidth allocated practically for the stream media-on-demand service if comparison result of the second comparison unit is that the playback bit-rate is larger than or equal to the user subscription bandwidth; take the playback bit-rate as the transmission bandwidth allocated practically for the stream media-on-demand service, or take a first transmission bandwidth as the transmission bandwidth allocated practically for the stream media-on-demand service if comparison result of the second comparison unit is that the playback bit-rate is less than the user subscription bandwidth, wherein the first transmission bandwidth is obtained by adding a first adjustment value to the playback bit-rate and is smaller than the user subscription bandwidth; and controlling the transmission of the stream media file by adopting the transmission bandwidth allocated practically for the stream media-on-demand service.

13. The apparatus according to any one of claims 9-12, wherein the apparatus further comprises:
a feature tuple extracting module configured to extract a feature tuple from the HTTP response message received by the second communication interface module;
a feature tuple management module configured to match the feature tuple with a maintained feature tuple management table; enable the bit-rate identifying module to perform processing if the matching is successful and the bit-rate recognition status identification that is associated with a matched feature tuple record indicates the playback bit-rate is not identified or the matching is not successful; enable the bandwidth control module to control the transmission of the stream media file by directly adopting the determined transmission bandwidth if the matching is successful and the bit-rate recognition status identification that is associated with the matched feature tuple record indicates that the playback bit-rate has been identified.

14. The apparatus according to claim 13, wherein the feature tuple management module is further configured to associate the feature tuple extracted by the feature tuple extracting module with the bit-rate recognition status identification for indicating that the bit-rate identifying module has identified the playback bit-rate, add the associated feature tuple as a new feature tuple record to the feature tuple management table; or add the feature tuple extracted by the feature tuple extracting module as the new feature tuple record to the maintained feature tuple management table, wherein the feature tuple record points to a bit-rate recognition status identification for indicating that the bit-rate identifying module has identified the playback bit-rate.

15. A system for a mobile user to access a stream media file, comprising a terminal, a communication apparatus and a media server, wherein:
the terminal is configured to send a HTTP request message of a stream media-on-demand service of a user;
the communication apparatus is configured to forward the HTTP request message of the stream media-on-demand service to the media server after acquiring and identifying the HTTP request message of the stream media-on-demand service; receive and parse a HTTP response message which is returned from the media server and obtain a playback bit-rate of a stream media file to be transmitted; determine a transmission bandwidth allocated practically for the stream media-on-demand service according to comparison result between the playback bit-rate and a user subscription bandwidth allocated initially for the stream media-on-demand service; and transmit a HTTP response message carried with stream media data to the terminal by adopting the determined transmission bandwidth after receiving the HTTP response message carried with stream media data; and
the media server is configured to receive the HTTP request message of the stream media-on-demand service, and return the HTTP response message which is carried with a media meta-data head and corresponds to the HTTP response message of the stream media-on-demand service; and return the HTTP response message carried with stream media data.
